# EUROPEAN PATENT SPECIFICATION

(11) **EP 2 792 282 B1**
(45) Date of publication and mention of the grant of the patent: **16.03.2016**
(21) Application number: 14162474.2
(22) Date of filing: 28.03.2014
(51) Int. Cl.: A47J 31/44, A47J 31/36

(54) **Apparatus for dispensing coffee and the like**
Vorrichtung zur Abgabe von Kaffee und dergleichen
Appareil de distribution de café et similaire

(30) Priority: 15.04.2013 IT MI20130617; 15.04.2013 IT MI20130618
(43) Date of publication of application: 22.10.2014
(73) Proprietor: Bottarelli, Pierangelo, 24059 Urgnano - Bergamo (IT); Maggioni, Marco, 20871 Vimercate, Monza et Brianza (IT); Zappella, Marco, 24069 Luzzana, Bergamo (IT)
(72) Inventor: ZAPPELLA, Marco, I-24069 Luzzana, BERGAMO (IT)
(74) Representative: Long, Giorgio

(56) References cited:
- EP-A1- 2 484 252
- WO-A1-01/72189
- WO-A1-2007/016977
- WO-A1-2009/104071
- WO-A1-2012/168918
- CN-Y- 201 216 487

## Description

The present invention relates to an apparatus for dispensing coffee and similar infusions, in particular usable for capsule coffee and the like.

The household use of apparatuses for preparing coffee and surrogates has become more and more widespread, and it is now part of the usual equipment of a household kitchen. Such apparatuses are composed of a casing housing a boiler, a pump, and a dispensing unit, and they are characterized by having reduced dimensions.

There are several types of such apparatuses: those using a filter holder in which ground coffee is inserted and compressed, the operation of which resembles to the professional machines in cafes; the apparatuses using pre-packaged pods, as above, but in which the filter holder is adapted to receive the pod made of a filtering material of the type already used for tea bags; finally, the apparatuses using the pre-packaged capsules, consisting in a cylindrical plastic casing with the two base surfaces consisting in a filter.

The latter are more and more widespread by virtue of their ease of use. Indeed, the manual filter holder is not present anymore, since the capsule is directly inserted into the apparatus. Therefore, the only operation required to the user is inserting the capsule and actuating the dispensing operation, which may take place either simply by closing the capsule compartment, or by actuating a special push button. The removal of the exhausted capsule may take place automatically at the end of the dispensing operation, or when a new capsule is inserted. In other cases, on the other hand, the removal of the exhausted capsule is manual.

The dispensing unit that is used in this type of machines is usually arranged vertically or horizontally.

The horizontal unit has the advantage of a higher handiness in inserting the capsule and ease of actuation of the closing lever. Moreover, it allows the capsules, once the dispensing operating is complete, to fall into the capsule collection compartment (when present) by gravity.

On the other hand, the vertical unit has the advantage of an improved dispensing, since the coffee, once it has escaped the capsule, flows freely downwardly by gravity, and it does not form deposits along its path. Therefore, there is the certainty that the conduit dispensing the coffee from the capsule is always empty after a dispensing operation. However, this system has the drawback of requiring the introduction of the capsule either frontally or laterally, instead of top-down, as for the horizontal machines, and this is seen as an inconvenience by the users.

Furthermore, the apparatuses of this type have quite complex mechanics, requiring the movement of the inner cup, which has to house the capsule during the dispensing, towards the capsule, while the latter remains stationary. A higher mechanical complexity involves higher manufacturing costs and a more frequent maintenance. The document EP-2484252 discloses a machine for preparing beverages by infusion of capsules.

It is the object of the present invention to provide an apparatus for dispensing coffee and similar infusions that solves the above-mentioned drawbacks and that is constructively simple, reliable, and that requires low maintenance.

Such an object is achieved by an apparatus for dispensing coffee or similar extracts as set forth in the appended claims, the definitions of which are an integral part of the present description.

Further characteristics and advantages of the present invention will be more apparent from the description of some implementation examples, given herein below by way of illustrative, non-limiting example, with reference to the following Figures:
Fig. 1 represents a side cross-sectional view of the apparatus for dispensing coffee and the like according to the invention;
Fig. 2 represents a side view of a detail of the apparatus of Fig. 1;
Fig. 3 represents a side cross-sectional view of the detail of Fig. 2;
Figs. 4A, 4B, and 4C represent side cross-sectional views of the detail of Fig. 2 in three different operative conditions;
Figs. 5A, 5B, and 5C represent side cross-sectional views of the detail of Fig. 2 in other three different operative conditions;
Fig. 6 represents a partially transparent perspective view of the detail of Fig. 2;
Fig. 7 represents a rear perspective view of the apparatus of Fig. 1 in an operative condition;
Fig. 7A represents a perspective view of the tank of the apparatus of Fig. 1;
Fig. 7B represents a perspective sectional view of a detail of the tank of Fig. 7A;
Figs. 8A, 8B, and 8C represent side views of the detail of Fig. 2 in the three different operative conditions shown in Figs. 3A, 3B, and 3C, respectively;
Fig. 9 represents a side cross-sectional view of a detail of the apparatus of Fig. 1 according to a different embodiment.

With reference to the Figures, the apparatus for dispensing coffee and similar infusions, generally indicated with the numeral 1, comprises a casing 10 in which a tank 2 for water, pumping means 3, heating means 4, typically a boiler, and an infusion unit 5 are contained.

The casing 10 has a base surface 10a provided with small feet 6 for the distancing from a support plane. Typically, the small feet 6 are four and they are gummed, so as to reduce a slippage possibility for the apparatus.

The casing 10 further comprises a rear face 7, having an opening in which the tank 2 is housed in a withdrawable manner, and a front face 8 having a recess 9 in which a rest surface 11 for a container is arranged, typically a cup, for collecting the dispensed infusion. A dispensing nozzle 12 protrudes into the recess 9, for dispensing the infusion, such dispensing nozzle 12 being in flow communication with the infusion unit 5.

A basket 50 for collecting the exhausted capsules ejected from the infusion unit 5 is also located within the casing 10.

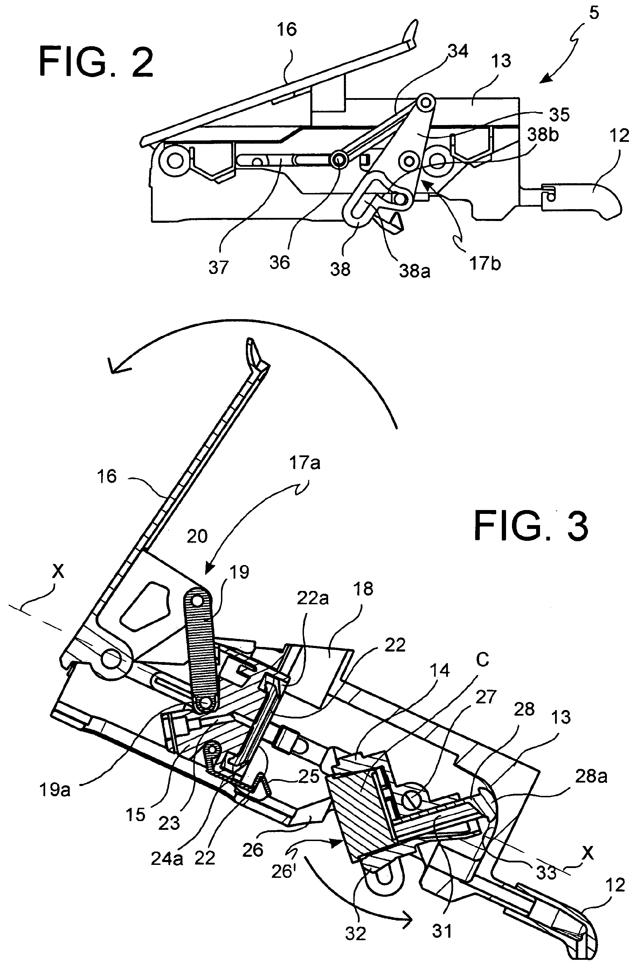

With reference to Fig. 3, the infusion unit 5 comprises a hollow body 13 in which a collecting cup 14 is movably arranged, which is adapted to receive a pre-packaged capsule C containing coffee powder or of another food, the infusion of which is required. The capsule C is of a conventional type.

The infusion unit 5 is arranged in an inclined position. By the term "inclined position" is meant a position of the longitudinal axis X of the infusion unit 5 that is different from the horizontal or vertical position, and particularly a position that forms an acute angle with a horizontal plane on which such axis X is incident. In preferred embodiments, such angle ranges between 20° and 50°, more preferably between 25° and 35°. This features allows discharging by gravity the coffee residues after each infusion operation, as in a vertical arrangement, while preserving the convenience of the capsule insertion from the top, which is typical of the horizontal arrangement.

The infusion unit 5 comprises a thrust member 15 and an actuating lever 16 that moves, by a leverage 17 comprising a first and a second leverages 17a, 17b, both the thrust member 15 and the collecting cup 14.

The actuating lever 16 also acts as a lid to open or close a loading compartment 18 of the capsule C.

The actuating lever 16 is hinged in the proximity of the end of the hollow body 13 opposite that on which the dispensing nozzle 12 is arranged, and it is connected to the thrust member 15 by a first leverage 17a.

The first leverage 17a comprises an articulated member 19, an end of which is hinged on one or more sides 20 on the lower surface of the actuating lever 16, while the other end is hinged to the thrust member 15 by the hinge 19a.

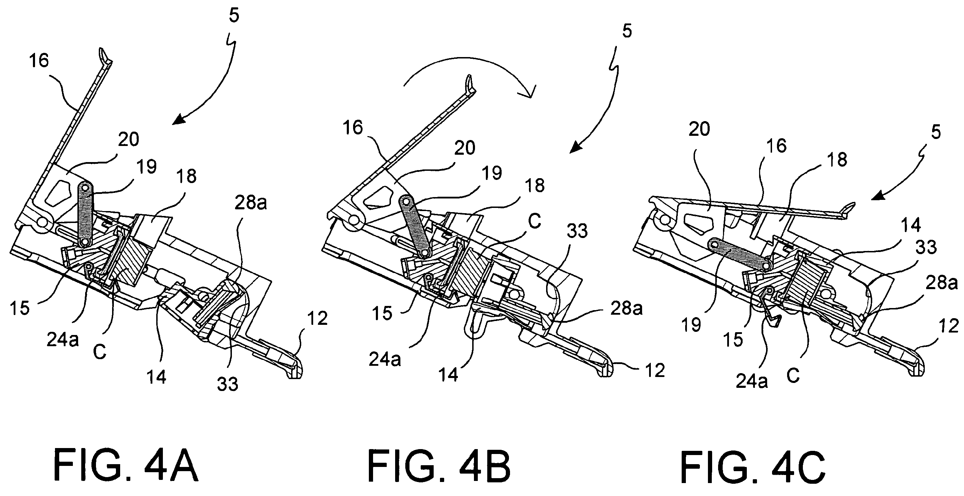

As shown in the Figs. 4A, 4B, and 4C, which show successive views, the actuating lever 16 lowering causes the movement of the thrust member 15 from a retracted position with respect to the loading compartment 18 of the capsule C to an advanced position (Fig. 4C), in which the thrust member 15 brings the capsule within the collecting cup 14.

The thrust member 15 comprises a thrust surface 22 intended to come into contact with the capsule C. A conduit 23 opens on the thrust surface 22, passing through the thrust member 15 body and which is connected on the outer surface thereof by a tube 23a carrying pressurized hot water coming from the boiler 4.

The thrust surface 22 comprises a gasket 22a along the perimeter thereof, to ensure the sealing during the preparation of the infusion.

Blocking means 24 for the capsule C are arranged on the thrust member 15. The blocking means 24 consist in two or more (three, in the present embodiment) nippers 24a that are hinged to the thrust member 15. The nippers 24a have a distal end ending with a tooth 25 facing inwardly, so as to clamp as pliers the capsule C when the nippers 24a close thereon.

As shown in the Figs. 4A, 4B, and 4C, the nippers 24a are kept in the closing position on the capsule C by interference fit with the hollow body 13 inner surface. The hollow body 13 has openings 26 arranged at the nippers 24a in a position longitudinally downstream of the loading compartment 18, so that, when the actuating lever 16 is lowered and the thrust member 15 moves forward towards the collecting cup 14, the teeth 25 of the nippers 24a interfere with the collecting cup 14 edge, which has a bevel, and move away from the capsule C. Therefore, the capsule C, being not held anymore by the nippers 24a, can be housed in the collecting cup 14.

Furthermore, a further opening 26' below the collecting cup 14 is provided for on the lower surface of the hollow body 13, the function of which will be apparent herein below.

The collecting cup 14 comprises substantially cylindrical side walls that are slightly flared outwardly, so as to house the capsule C, and a bottom 30. The side walls end with a beveled edge 32 having an outer bevel, the function of which is to interfere with the tooth 25 of a nipper 24a and to push it open as described above.

The collecting cup 14 is movably associated to a hinge 27 so as to rotate between a loading position, in which the collecting cup 14 has its opening facing and aligned with the capsule C when it is pushed by the thrust member 15, and an ejecting position, in which the opening of the collecting cup 14 faces downwardly, so as to make the exhausted capsule C to fall by gravity through the opening 26' of the hollow body 13 and into the basket 50.

In order to promote the ejection of the capsule C from the collecting cup 14, the latter is provided with an ejection plunger 28 that can slide within a housing 29 protruding externally from the bottom 30 of the collecting cup 14. In this manner, the ejection plunger 28 may take an extended position (Figs. 4B and 4C), in which it is substantially flush with the inner surface of the cup 14 bottom 30, and an ejecting position (Fig. 4A), in which the plunger 28 protrudes from the bottom 30 towards the inside of the cup 14, exerting a pressure onto the capsule C, which promotes the ejection thereof.

The stroke of the plunger 28 causing the ejection of the capsule C is obtained by the interference of the plunger 28 with a cam 33. According to the embodiment shown in the Figures, the cam 33 is implemented by shaping a portion of the hollow body 13 inner surface so as to form an arched surface, the distance of which from the hinge 27 is larger along the axis X than in the perpendicular direction thereto laying on the plane portion in which the plunger is mobile. In this manner, when the collecting cup 14 rotates about the hinge 27 from the loading position to the ejecting position, the plunger 28 is pushed towards the inside of the cup by the interference with such cam 33.

In certain embodiments, the plunger 28 has a counter head 28a suitable to interfere with said cam 33, said counter head 28a being in a mushroom shape.

The collecting cup 14 comprises a dispensing conduit 31 conveying the infusion in the dispensing nozzle 12 and that is obtained within the plunger 28 stem.

The movement of the collecting cup 14 takes place by the second leverage 17b that is, in turn, controlled by the actuating lever 16.

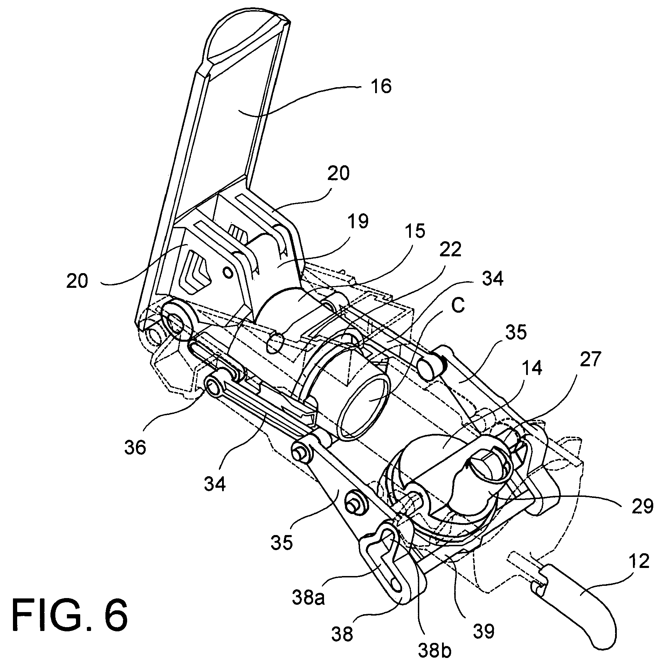

As shown in Fig. 2 and Fig. 6, the leverage 17b is arranged symmetrically on the two sides of the hollow body 13, whereby the mechanism will be described with reference to only one of the sides, notwithstanding that it will be applicable also to the corresponding mechanism on the invisible side in the Figure.

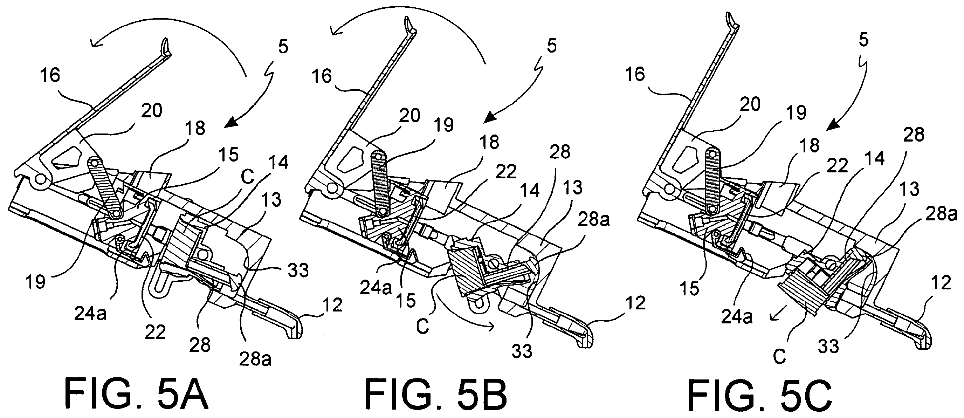

The leverage 17b comprises a first articulated arm 34 and a second articulated arm 35. The first articulated arm 34 has a first end hinged on the thrust member 15 by a hinge 36 that has the pin in common with the hinge 19a. A longitudinal slit 37 obtained in the hollow body 13 allows the pin exiting from the hinges 19a, 36 and the longitudinal movement thereof during the various closing or opening steps of the actuating lever 16 (Figs. 4A-4C and 5A-5C). On the other hand, the second end of the first articulated arm 34 is hinged to a first end of the second articulated arm 35.

The second articulated arm 35 comprises a cam 38 at the second end opposite the articulation one with the first articulated arm 34.

The cam 38 is substantially L-shaped and comprises a first path length 38a in alignment with the axis of the second articulated arm 35, and a second path length 38b substantially perpendicular thereto and with a slightly arched shape.

With particular reference to Fig. 6, the collecting cup 14 comprises a transversal pin 39 protruding laterally from the portion of the cup facing downwardly and extending externally to the hollow body 13 until inserting in the cam 38. In this manner, the transversal pin 39 acts as a driven member of the cam 38.

With reference to the Figs. 4A-4C, 5A-5C, and 8A-8C, the operation of the infusion unit 5 is as follows.

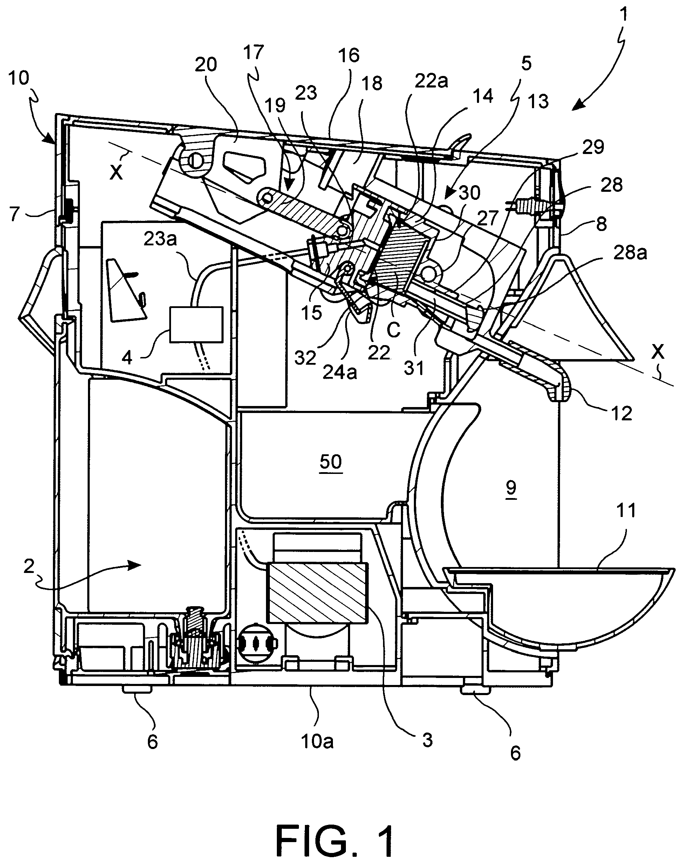

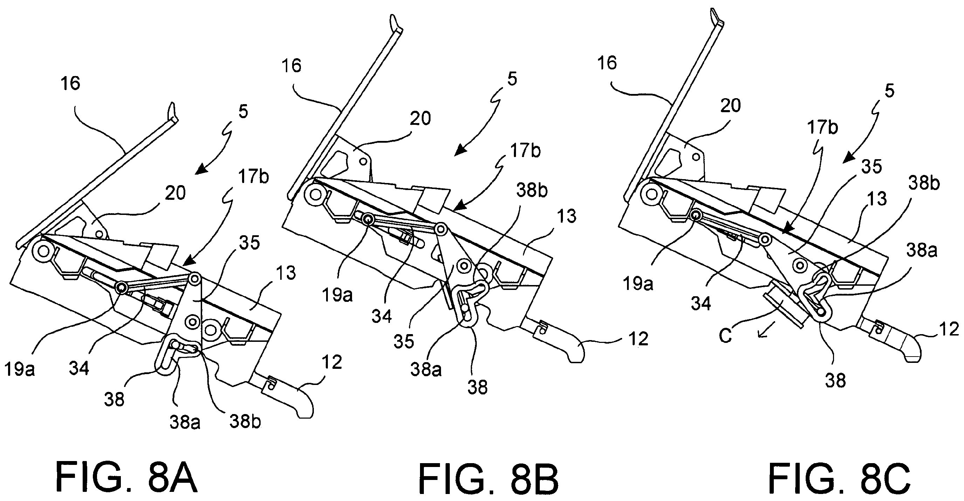

After the introduction of a capsule C into the loading compartment 18 (Fig. 4A), the actuating lever 16 is lowered, which, by the first leverage 17a, advances the thrust member 15 to the direction of the collecting cup 14 (Fig. 4B). At the same time, the second leverage 17b moves from a first position in which the collecting cup 14 is in the ejecting position (Fig. 8C and Fig. 4A) and in which the cup transversal pin 39 is arranged in an end position of the cam 38 path, at the end of the first portion 38a of the path, to a second position in which the collecting cup 14 is in the loading position and the transversal pin 39 arranges in a second end position of the cam 38 path, at the opposite end of the second portion 38b of the path. The latter position is reached when the actuating lever 16 is fully lowered (Fig. 1) and the capsule C is inserted up to the bottom of the collecting cup 14. Figs. 4B-4C show intermediate positions, from which it is seen that the alignment of the collecting cup 14 with the capsule C is obtained when the actuating lever 16 has been lowered by an angle that is less than half the total angle run by the lever.

Figs. 5A-5C and 8A-8C show the opposite path of the actuating lever 16, i.e., the opening thereof, leading to the ejection of the exhausted capsule C. In particular, Figs.5A-5C show the interaction of the plunger 28 with the cam 33 inside the hollow body 13, this promoting the ejection of the capsule C (Fig. 5C). Once the capsule C has been ejected from the collecting cup 14, it will fall into the basket 50 (Fig. 1), which will be emptied after a given number of infusions.

The preparation and dispensing of the infusion take place during the closing period of the actuating lever 16. The pumping means 3 withdraw from the tank 2 the amount of water that is necessary for a beverage, and convey it to the heating means 4, from which the water, heated and pressurized by the pumping means 3, is inserted into the thrust member 15, then through the capsule C. Next, the infusion passes through the conduit 31 and the dispensing nozzle 12, and it is dispensed into a container (not shown) located on the rest surface 11.

Turning the pump on and off is carried out by micro-switch (not shown), which can be driven either by closing the actuating lever 16 or by a special manual push button. The apparatus 1 shall first be turned on in order to bring the water contained into the heating means to the service temperature.

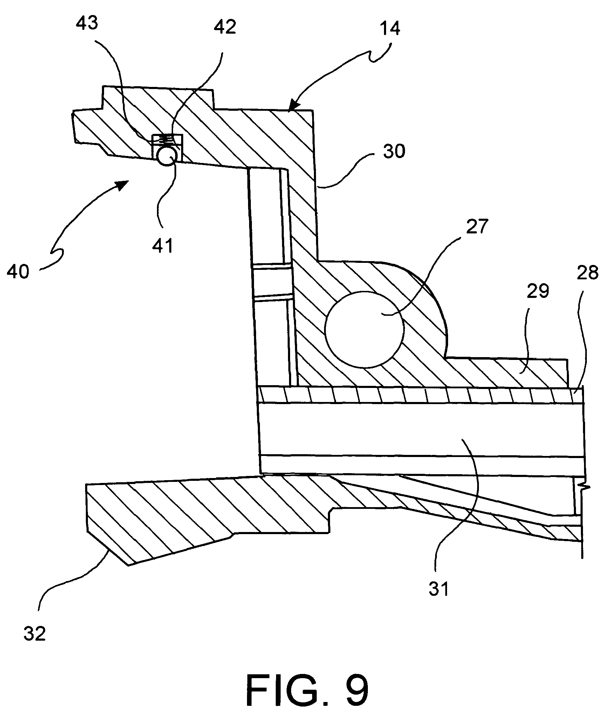

According to an embodiment shown in Fig. 9, a pusher 40 is arranged on the collecting cup 14 side walls, the function of which is to push onto a side of the capsule C so that, in the initial step of the ejection, i.e., when the thrust member 15 begins to move back, the capsule C is inclined with respect to the axis X and the release thereof from the gasket 22a is promoted.

The pusher 40 comprises a small sphere 41 housed in a cavity 42 obtained in the collecting cup 14 side walls. A spring 43 is arranged on the bottom of the cavity 42 and insists on the small sphere 41. The cavity 42 has an opening having a diameter less than that of the small sphere 41, so as to hold it therein, yet such as to allow the small sphere 41 protruding. When the capsule C is inserted into the collecting cup 14, the small sphere 41 exerts a pressure on a side counter-acting the spring 43.

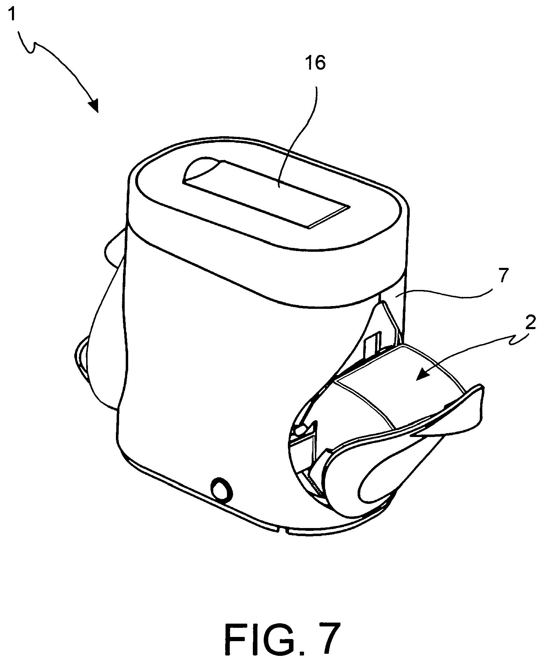

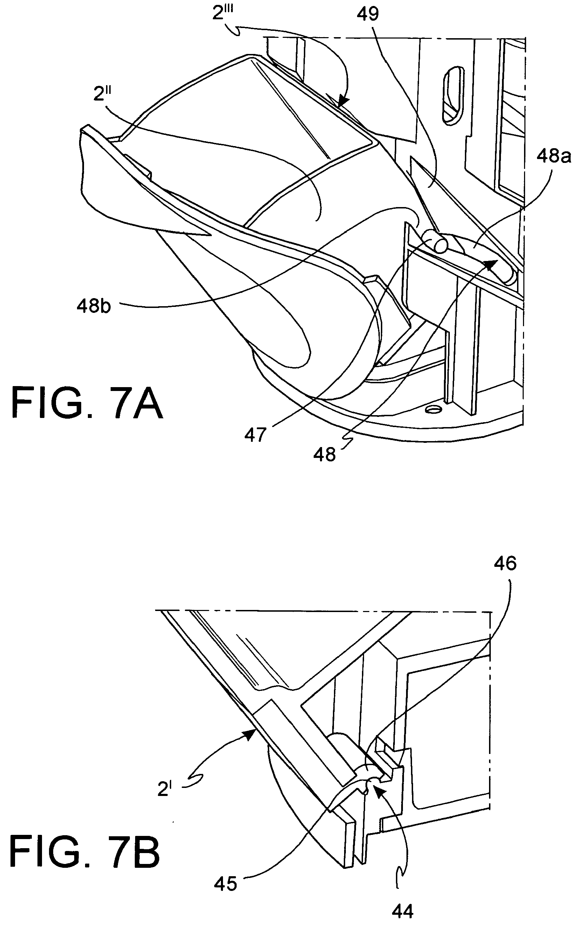

In certain embodiments, as shown in the Figs. 7, 7A, and 7B, the tank 2 can be partially withdrawn by tilting around a hinge 44 arranged on the lower outer edge 2' of the tank 2. In certain embodiments, the hinge 44 is formed by a pin 45, obtained in the shape of a semicircular rib on the lower edge of the rear face 7 of the casing 10, and by a groove 46, obtained along the lower outer edge 2' of the tank 2 and snap-couplable to said pin 45. For example, both the pin 45 and the groove 46 may be obtained by moulding.

A second pin 47 is located inferiorly on both the side walls 2" of the tank 2 (only one being visible in the Figures), in the proximity of the rim dividing such side walls 2" from the front face 2"'. Such pin 47 is slidably insertable in an arched guide 48, obtained directly in the wall of the casing 10, along the two lateral sides 49 (in this case also, only one is visible) surrounding the opening in which the tank 2 is inserted. The arched guide 48 has a first length 48a with convexity facing upwardly, so as to complement the tilting movement of the tank 2 about the hinge 44, and a second outmost length 48b, with convexity facing downwardly, acting as holding means to avoid the complete overturning of the tank 2, once it reaches its opening position. In this manner, a complete withdrawal of the tank in order to fill it with water is not needed. Once the partially open position shown in Fig. 7 has been reached, the tank 2 can be filled in. On the other hand, when a complete withdrawal thereof is needed, for example, to clean it, it is possible to slide the pin 47 upwardly, along the second length 48b of the guide 48, until releasing it from the housing thereof.

The apparatus 1 according to the invention can be used to prepare an espresso or long coffee (according to the amount of dosed water) or of different infusions, such as tea, ginseng, barley coffee, etc.

The advantages of the apparatus for dispensing coffee and similar infusions according to the invention are multiple.

First of all, the inclination of the infusion unit 15, as stated above, allows combining the advantages of a vertical arrangement with those of a horizontal arrangement, however without the associated drawbacks.

A further advantage is that the capsule is brought within the collecting cup 14, and not vice versa, as instead occurs in the conventional machines. This feature, besides being a simplification from the movement mechanism standpoint, allows moving the capsule C away from the loading position. In fact, the capsule C is pushed from the position in which it is aligned with the loading compartment 18 to a position downstream thereof. Thus, it is avoided that, in the case when the gasket 22a fails, causing boiling-hot water escaping the collecting cup 14, boiling-hot water splashes may reach the outside of the apparatus 1, damaging the user.

The active ejection system of the exhausted capsule C by rotating the collecting cup 14 and actuating the plunger 28 allows maintain the collecting cup 14 free and clean in every moment. Possible residues of coffee or another infusion will tend to drop into the basket 50.

A further advantage is the possibility to partially open the tank 2 for topping it up, and to subsequently be able to withdraw it completely only when needed, for example, for the maintenance thereof.
It shall be apparent that only some particular embodiments of the present invention have been described, to which those skilled in the art will be able to make all those modifications that are necessary for adapting it to particular applications, without anyhow departing from the protection scope of the present invention as defined in the appended claims.

## Claims

1. An apparatus (1) for dispensing coffee and similar infusions, of the type that uses a pre-packaged capsule (C) containing coffee powder or of another food, the infusion of which is required, said apparatus (1) comprising a casing (10) in which a tank (2) for water, pumping means (3), heating means (4), and an infusion unit (5) are contained, wherein the infusion unit (5) comprises:
- a hollow body (13) in which a collecting cup (14) is movably arranged, which is adapted to receive said capsule (C), a loading compartment (18) for said capsule (C), and a thrust member (15) mobile between a retracted position with respect to said loading compartment (18) and an advanced position, wherein the thrust member (15) brings the capsule (C) within the collecting cup (14),
- an actuating lever (16) that moves, by a leverage (17), both the thrust member (15) and the collecting cup (14), and
- a dispensing nozzle (12) for dispensing said infusion,
**characterized in that**
the collecting cup (14) is provided with an ejection plunger (28) that can slide within a housing (29) protruding externally from the bottom (30) of the collecting cup (14), the ejection plunger (28) being slidable between an extended position, in which it is substantially flush with the inner surface of the bottom (30), and an ejection position, in which the ejection plunger (28) protrudes from the bottom (30) towards the inside of the cup (14), the collecting cup (14) comprising a dispensing conduit (31) conveying the infusion in the dispensing nozzle (12) and that is obtained within the ejection plunger (28) .

2. The apparatus (1) according to claim 1, wherein said leverage (17) comprises a first leverage (17a) for actuating the thrust member (15) and a second leverage (17b) for actuating the collecting cup (14).

3. The apparatus (1) according to any of the claims 1 to 2, wherein the collecting cup (14) is movably associated to a hinge (27) so as to rotate between a loading position, in which the collecting cup (14) has its opening facing and aligned with the capsule (C) pushed by the thrust member (15), and an ejecting position, in which the collecting cup (14) opening faces downwardly, so as to make the exhausted capsule (C) to fall.

4. The apparatus according to claim 1, wherein the ejection plunger (28) is actuated by the interference with a cam (33), the cam (33) being obtained by shaping a portion of the inner surface of the hollow body (13) so as to form an arched surface, the distance of which from the hinge (27) is larger along the axis (X) than in the perpendicular direction thereto laying on the plane portion in which the plunger is mobile.

5. The apparatus (1) according to any of the claims 2 to 4, wherein the second leverage (17b) comprises a first articulated arm (34) and a second articulated arm (35), said first articulated arm (34) having a first end hinged on the thrust member (15) by a hinge (36) that has the pin in common with the hinge (19a), the second end of the first articulated arm (34) being instead hinged at a first end of the second articulated arm (35); and wherein said second articulated arm (35) comprises, at the second end opposite the articulation one with the first articulated arm (34), a cam (38); and wherein the collecting cup (14) comprises a transversal pin (39) protruding laterally from the portion of the cup facing downwardly and extending externally to the hollow body (13) until inserting in the cam (38),the said cam (38) being substantially L-shaped and comprising a first path length (38a) in alignment with the axis of the second articulated arm (35), and a second path length (38b) substantially perpendicular thereto and with a slightly arched shape.

6. The apparatus (1) according to any of the claims 1 to 5, wherein a pusher (40) is arranged on the side walls of the collecting cup (14), which is adapted to exert a side pressure on the capsule (C).

7. The apparatus (1) according to claim 6, wherein the pusher (40) comprises a small sphere (41) housed in a cavity (42) obtained in the inner side walls of the collecting cup (14), a spring (43) being arranged on the bottom of the cavity (42) and insisting on the small sphere (41), wherein the cavity (42) has an opening having a diameter less than that of the small sphere (41), so as to hold it therein, yet such as to allow the small sphere (41) protruding.

8. An apparatus (1) for dispensing coffee and similar infusions, of the type that uses a pre-packaged capsule (C) containing coffee powder or of another food, the infusion of which is required, according to any one of claims 1 to 7, **characterized in that** the tank (2) can be partially withdrawn by tilting around a hinge (44) arranged on the lower outer edge (2') of the tank (2), the tank (2) comprising a pin (47) located inferiorly on both the side walls (2") of the tank (2), in the proximity of the rim dividing such side walls (2") from the front face (2"'), said pin (47) being slidably insertable in an arched guide (48), obtained directly in the wall of the casing (10), along the two lateral sides (49) surrounding the opening in which the tank (2) is inserted; wherein the arched guide (48) has a first length (48a) with convexity facing upwardly, and a second outermost length (48b) with convexity facing downwardly.

9. An apparatus (1) for dispensing coffee and similar infusions, of the type that uses a pre-packaged capsule (C) containing coffee powder or of another food, the infusion of which is required, according to any one of claims 1 to 7, **characterized in that** the infusion unit (5) is arranged in an inclined position along a longitudinal axis (X) forming an acute angle with a horizontal plane on which such axis (X) is incident, wherein such angle preferably ranges between 20° and 50° or between 25° and 35°.

## Patentansprüche

1. Vorrichtung (1) zur Abgabe von Kaffee und ähnlichen Aufgüssen von der Art, die eine abgepackte Kapsel (C) benutzt, welche Kaffeepulver enthält, oder von einem anderen Lebensmittel, von welchem der Aufguss gefordert ist, wobei die Vorrichtung (1) ein Gehäuse (10) umfasst, in welchem ein Tank (2) für Wasser, Pumpmittel (3), Erwärmungsmittel (4), und eine Aufgusseinheit (5) beinhaltet sind, wobei die Aufgusseinheit (5) umfasst:
- einen Hohlkörper (13), in welchem ein Sammelbecher (14) bewegbar angeordnet ist, welcher dazu geeignet ist, die Kapsel (C) aufzunehmen, ein Ladeabteil (18) für die Kapsel (C) und ein Stoßelement (15), welches zwischen einer zurückgezogenen Position in Bezug zu dem Ladeabteil (18) und einer vorgerückten Position beweglich ist, wobei das Stoßelement (15) die Kapsel (C) in den Sammelbecher (14) bringt,
- einen Bedienhebel (16), welcher durch einen Hebel (17) sowohl das Stoßelement (15) als auch den Sammelbecher (14) bewegt, und
- eine Abgabedüse (12) zum Abgeben des Aufgusses,
**dadurch gekennzeichnet, dass**
der Sammelbecher (14) mit einem Auswurfstößel (28) ausgestattet ist, welcher innerhalb einer von dem Boden (30) des Sammelbechers (14) nach außen ragenden Behausung (29) gleiten kann, wobei der Auswurfstößel (28) zwischen einer ausgefahrenen Position, in welcher dieser im Wesentlichen fluchtend mit der Innenfläche des Bodens (30) ist, und einer Auswurfposition, in welcher der Auswurfstößel (28) von dem Boden (30) in Richtung der Innenseite des Bechers (14) ragt, gleitbar ist, wobei der Sammelbecher (14) einen Abgabekanal (31) umfasst, welcher den Aufguss in die Abgabedüse (12) befördert und welcher innerhalb des Auswurfstößels (28) erhalten ist.

2. Vorrichtung (1) nach Anspruch 1, wobei der Hebel (17) einen ersten Hebel (17a) zum Betätigen des Stoßelements (15) und einen zweiten Hebel (17b) zum Betätigen des Sammelbechers (14) umfasst.

3. Vorrichtung (1) nach einem der Ansprüche 1 bis 2, wobei der Sammelbecher (14) einem Gelenk (27) bewegbar zugeordnet ist, um zwischen einer Ladeposition, in welcher der Sammelbecher (14) seine Öffnung zugewandt und ausgerichtet mit der durch das Stoßelement (15) gedrückten Kapsel (C) aufweist, und einer auswerfenden Position, in welcher die Sammelbecher(14)-Öffnung nach unten zeigt, zu rotieren, um zu erzielen, dass die geleerte Kapsel (C) fällt.

4. Vorrichtung nach Anspruch 1, wobei der Auswurfstößel (28) durch den Eingriff mit einer Nocke (33) betätigt ist, wobei die Nocke (33) durch eine Formgebung eines Abschnitts der Innenfläche des Hohlkörpers (13) zum Bilden einer gewölbten Fläche erhalten ist, wobei der Abstand von dieser von dem Gelenk (27) entlang der Achse (X) größer ist als in der rechtwinkligen Richtung dazu, welche an dem ebenen Abschnitt, in welchem der Stößel beweglich ist, liegt.

5. Vorrichtung (1) nach einem der Ansprüche 2 bis 4, wobei der zweite Hebel (17b) einen ersten beweglichen Arm (34) und einen zweiten beweglichen Arm (35) umfasst, wobei der erste bewegliche Arm (34) ein erstes Ende aufweist, welches an dem Stoßelement (15) durch ein Gelenk (36) angelenkt ist, welches den Stift gemeinsam mit dem Gelenk (19a) aufweist, wobei das zweite Ende des ersten beweglichen Armes (34) stattdessen an einem ersten Ende des zweiten beweglichen Armes (35) angelenkt ist; und wobei der zweite bewegliche Arm (35) an dem zweiten Ende entgegengesetzt zu dem Anlenkungsende mit dem ersten beweglichen Arm (34) eine Nocke (38) umfasst; und wobei der Sammelbecher (14) einen transversalen Stift (39) umfasst, welcher von dem Abschnitt des Bechers, welcher nach unten zeigt und sich nach außen zu dem Hohlkörper (13) bis zum Einrücken in die Nocke (38) erstreckt, lateral herausragt, wobei die Nocke (38) im Wesentlichen L-förmig ist und eine erste Weg-Teilstrecke (38a) in Ausrichtung mit der Achse des zweiten beweglichen Armes (35) und eine zweite Weg-Teilstrecke (38b) im Wesentlichen senkrecht dazu und mit einer leichten gebogenen Form, umfasst.

6. Vorrichtung (1) nach einem der Ansprüche 1 bis 5, wobei ein Drücker (40), welcher dazu geeignet ist, einen Seitendruck auf die Kapsel (C) auszuüben, an den Seitenwänden des Sammelbechers (14) angeordnet ist.

7. Vorrichtung (1) nach Anspruch 6, wobei der Drücker (40) eine kleine Kugel (41) umfasst, die in einem Hohlraum (42) aufgenommen ist, welcher an den inneren Seitenwänden des Sammelbechers (14) erhalten ist, wobei eine Feder (43) an dem Boden des Hohlraumes (42) angeordnet ist und auf die kleine Kugel (41) drängt, wobei der Hohlraum (42) eine Öffnung aufweist, welche einen Durchmesser kleiner als der der kleinen Kugel (41) aufweist, um diese darin zu halten, jedoch derart, um der kleinen Kugel (41) zu erlauben, hervorzustehen.

8. Vorrichtung (1) zur Abgabe von Kaffee und ähnlichen Aufgüssen von der Art, die eine abgepackte Kapsel (C) benutzt, welche Kaffeepulver enthält, oder von einem anderen Lebensmittel, von welchem der Aufguss gefordert ist, nach einem der Ansprüche 1 bis 7, **dadurch gekennzeichnet, dass** der Tank (2) durch Kippen um ein Gelenk (44), welches an der unteren äußeren Ecke (2') des Tanks (2) angeordnet ist, teilweise zurückgezogen werden kann, wobei der Tank (2) einen Stift (47) umfasst, welcher an beiden der Seitenwände (2") des Tanks (2), in der Nähe des Randes, welcher diese Seitenwände (2") von der Vorderseite (2"') teilt, tiefstehend lokalisiert ist, wobei der Stift (47) in eine gebogene Führung (48) gleitbar einbringbar ist, welche direkt in der Wand des Gehäuses (10), entlang der zwei lateralen Seiten (49), welche die Öffnung umgeben, in welche der Tank (2) eingesetzt ist, erhalten ist; wobei die gebogene Führung (48) eine erste Teilstrecke (48a) mit einer Konvexität aufweist, die nach oben zeigt und eine zweite äußerste Teilstrecke (48b) mit einer Konvexität aufweist, die nach unten zeigt.

9. Vorrichtung (1) zur Abgabe von Kaffee und ähnlichen Aufgüssen von der Art, die eine abgepackte Kapsel (C) benutzt, welche Kaffeepulver enthält, oder von einem anderen Lebensmittel, von welchem der Aufguss gefordert ist, nach einem der Ansprüche 1 bis 7, **dadurch gekennzeichnet, dass** die Aufgusseinheit (5) an einer geneigten Position entlang einer Längsachse (X) angeordnet ist, welche mit einer horizontalen Ebene, mit welcher eine solche Achse (X) inzident ist, einen spitzen Winkel bildet, wobei ein solcher Winkel vorzugsweise zwischen 20° und 50° oder zwischen 25° und 35° liegt.

## Revendications

1. Appareil (1) pour la distribution de café et d'infusions similaires, du type utilisant une capsule préemballée (C) contenant de la poudre de café ou d'un autre aliment devant être infusé, lequel appareil (1) comprend un boîtier (10) contenant un réservoir (2) pour l'eau, des moyens de pompage (3), des moyens de chauffage (4) et une unité d'infusion (5), l'unité d'infusion (5) comprenant :
- un corps creux (13) dans lequel un siège collecteur (14) est disposé de façon mobile, qui est adapté pour recevoir ladite capsule (C), un compartiment de chargement (18) pour ladite capsule (C) et un élément de poussée (15) mobile entre une position rétractée par rapport audit compartiment de chargement (18) et une position avancée dans laquelle l'élément de poussée (15) amène la capsule (C) dans le siège collecteur (14),
- un levier d'actionnement (16) qui déplace, par un bras de levier (17), à la fois l'élément de poussée (15) et le siège collecteur (14), et
- un bec de distribution (12) pour distribuer ladite infusion,
**caractérisé en ce que** le siège collecteur (14) est muni d'un piston éjecteur (28) qui peut coulisser dans un boîtier (29) faisant saillie vers l'extérieur à partir du fond (30) du siège collecteur (14), le piston éjecteur (28) pouvant coulisser entre une position déployée, dans laquelle il est sensiblement de niveau avec la surface intérieure du fond (30), et une position d'éjection dans laquelle le piston éjecteur (28) dépasse du fond (30) vers l'intérieur du siège (14), le siège collecteur (14) comprenant une conduite de distribution (31) qui achemine l'infusion dans le bec de distribution (12) et qui est formée dans le piston éjecteur (28).

2. Appareil (1) selon la revendication 1, dans lequel ledit bras de levier (17) comprend un premier bras de levier (17a) pour actionner l'élément de poussée (15) et un second bras de levier (17b) pour actionner le siège collecteur (14).

3. Appareil (1) selon l'une quelconque des revendications 1 à 2, dans lequel le siège collecteur (14) est associé de façon mobile à une charnière (27) de façon à tourner entre une position de chargement, dans laquelle l'ouverture du siège collecteur (14) est en face de la capsule (C) poussée par l'élément de poussée (15) et alignée avec elle, et une position d'éjection dans laquelle l'ouverture du siège collecteur (14) est tournée vers le bas pour faire tomber la capsule (C) épuisée.

4. Appareil selon la revendication 1, dans lequel le piston éjecteur (28) est actionné par l'interaction avec une came (33), laquelle came (33) est obtenue en mettant en forme une partie de la surface intérieure du corps creux (13) de façon à former une surface en arc de cercle, dont la distance par rapport à la charnière (27) est plus grande le long de l'axe (X) que dans la direction perpendiculaire à celui-ci dans la partie du plan dans laquelle le piston est mobile.

5. Appareil (1) selon l'une quelconque des revendications 2 à 4, dans lequel le second bras de levier (17b) comprend un premier bras articulé (34) et un second bras articulé (35), ledit premier bras articulé (34) ayant une première extrémité articulée sur l'élément de poussée (15) par une charnière (36) qui possède une goupille commune avec la charnière (19a), la seconde extrémité du premier bras articulé (34) étant au lieu de cela articulée à une première extrémité du second bras articulé (35), et dans lequel ledit second bras articulé (35) comprend une came (38) à la seconde extrémité opposée à l'extrémité d'articulation avec le premier bras articulé (34), et dans lequel le siège collecteur (14) comprend une goupille transversale (39) qui dépasse latéralement de la partie du siège tournée vers le bas et s'étend à l'extérieur vers le corps creux (13) jusqu'à s'insérer dans la came (38), ladite came (38) étant sensiblement en forme de L et comportant une première longueur de trajet (38a) dans l'alignement de l'axe du second bras articulé (35) et une seconde longueur de trajet (38b) sensiblement perpendiculaire à celui-ci et légèrement en forme d'arc de cercle.

6. Appareil (1) selon l'une quelconque des revendications 1 à 5, dans lequel un poussoir (40) est disposé sur les parois latérales du siège collecteur (14) et adapté pour exercer une pression latérale sur la capsule (C).

7. Appareil (1) selon la revendication 6, dans lequel le poussoir (40) comprend une bille (41) logée dans une cavité (42) formée dans les parois latérales intérieures du siège collecteur (14), un ressort (43) étant disposé au fond de la cavité (42) et appuyant sur la bille (41), la cavité (42) possédant une ouverture dont le diamètre est inférieur à celui de la bille (41) afin de la retenir à l'intérieur mais en laissant dépasser la bille (41).

8. Appareil (1) pour la distribution de café et d'infusions similaires, du type utilisant une capsule préemballée (C) contenant de la poudre de café ou d'un autre aliment devant être infusé, selon l'une des revendications 1 à 7, **caractérisé en ce que** le réservoir (2) peut être partiellement retiré en l'inclinant autour d'une charnière (44) disposée sur le bord extérieur inférieur (2') du réservoir (2), lequel réservoir (2) comporte une goupille (47) située en bas des deux parois latérales (2") du réservoir (2), à proximité du rebord séparant lesdites parois latérales (2") de la face avant (2"'), ladite goupille (47) pouvant être insérée de façon coulissante dans un guide en arc de cercle (48) formé directement dans la paroi du boîtier (10), le long des deux côtés latéraux (49) entourant l'ouverture dans laquelle le réservoir (2) est inséré, le guide en arc de cercle (48) ayant une première longueur (48a) avec une convexité tournée vers le haut et une seconde longueur extérieure (48b) avec une convexité tournée vers le bas.

9. Appareil (1) pour la distribution de café et d'infusions similaires, du type utilisant une capsule préemballée (C) contenant de la poudre de café ou d'un autre aliment devant être infusé, selon l'une des revendications 1 à 7, **caractérisé en ce que** l'unité d'infusion (5) est disposée dans une position inclinée le long d'un axe longitudinal (X) formant un angle aigu avec un plan horizontal sur lequel cet axe (X) est incident, cet angle étant de préférence compris entre 20° et 50° ou entre 25° et 35°.
